(19) Europäisches Patentamt

European Patent Office

Office européen des brevets

(11) **EP 0 992 896 A1**

(12) **EUROPEAN PATENT APPLICATION**

(43) Date of publication:
**12.04.2000 Bulletin 2000/15**

(51) Int. Cl.⁷: **G06F 9/38**, **G06F 11/263**

(21) Application number: **98402466.1**

(22) Date of filing: **06.10.1998**

(84) Designated Contracting States:
**AT BE CH CY DE DK ES FI FR GB GR IE IT LI LU MC NL PT SE**
Designated Extension States:
**AL LT LV MK RO SI**

(71) Applicants:
• **TEXAS INSTRUMENTS INC.**
**Dallas, Texas 75243 (US)**
Designated Contracting States:
**BE CH DE DK ES FI GB GR IE IT LI LU MC NL PT SE AT CY**

• **TEXAS INSTRUMENTS FRANCE**
**06271 Villeneuve Loubet Cédex (FR)**
Designated Contracting States:
**FR**

(72) Inventors:
• **Tardieux, Jean-Louis**
**06800 Cagnes-sur-Mer (FR)**
• **Laurenti, Gilbert**
**06570 Saint Paul de Vence (FR)**

(74) Representative:
**Harris, Ian Richard et al**
**D. Young & Co.,**
**21 New Fetter Lane**
**London EC4A 1DA (GB)**

(54) **Pipeline protection**

(57) A processing engine including a processor pipeline 820 with a number of pipeline stages 822-828, a number of resources and a pipeline protection mechanism 838. The pipeline protection mechanism includes, for each protected resource, respective arbitration logic 886 for anticipating access conflicts for that resource between the pipeline stages. An output of each arbitration logic is connected 888,889 to form stall control signals for controlling the selective stalling of the pipeline to avoid the resource access conflicts. The resources could, for example, be registers or parts (fields) within registers. By providing arbitration logic for each resource, an embodiment of the invention effectively enables a distribution of the control logic needed to anticipate potential resource access conflicts, and allows selectively stalling of the pipeline to avoid the conflicts from actually occurring.

FIG. 14

EP 0 992 896 A1

## Description

BACKGROUND OF THE INVENTION

The present invention relates to pipeline processor design, more especially to protecting a processor pipeline against conflicts.

Typically, modem processing engines, such as are found in digital signal processors (DSP's) or microprocessors employ a pipelined architecture in order to improve processing performance. A pipelined architecture means that various stages of instruction processing are performed sequentially such that more than one instruction will be at different stages of processing within the pipeline at any one stage.

Although a pipelined architecture does allow higher processing speed than would be possible if the processing of one instruction were to be completed before the processing of another could be started, this does lead to significant complications regarding potential conflicts in operation. Conflicts may occur between resource accesses, for example in a situation where a second instruction attempts to access a register or a part of a register before a first instruction has finished operations on that register, whereby the second instruction might receive invalid data.

Such potential conflicts are often termed "data hazards". Examples of possible data hazards are in cases of, for example:

- read after write (ex: ARx = ARy followed by *ARx = k16 )
- write after read (ex: ARx = ARy followed by mar(ARy=P16) )
- write after write (ex: ARx = ARy followed by mar(ARx=P16) )

Various techniques for hardware pipeline protection are known in the art.

One example is termed "scoreboarding". With scoreboarding each register or field can have pending writes and reads qualified with their execution phase using a table, or scoreboard. However, such an approach can be complex to handle and expensive in terms of logic overhead and, as a consequence, in power consumption. Particularly in processing engines designed for portable applications or applications powered other than by the mains (e.g., battery or other alternatively powered applications), such an approach is undesirable. Moreover, a scoreboarding approach rapidly becomes unwieldy when the processing engine has a large instruction set and/or a parallel processing architecture.

Other approaches can employ read/write queuing. However, such an approach is unsuitable where there is a wide variety of pipeline fields and/or sources of resource accesses. Moreover, such an approach can also rapidly become complex to handle and expensive in terms of logic overhead and power consumption.

A further approach can employ attaching a resource encoding to instructions within the pipeline. However, such an approach can also suffer from disadvantages similar to those described above.

There is, therefore, is a need for a different approach to resource conflict management within a pipeline for avoiding data hazards, which does not suffer from the disadvantages of the prior approaches described above.

SUMMARY OF THE INVENTION

Particular and preferred aspects of the invention are set out in the accompanying independent and dependent claims. Combinations of features from the dependent claims may be combined with features of the independent claims as appropriate and not merely as explicitly set out in the claims.

In accordance with an aspect of the invention, there is provided a processing engine including a processor pipeline with a plurality of pipeline stages, a plurality of resources and a pipeline protection mechanism. The pipeline protection mechanism includes, for each protected resource, respective arbitration logic for anticipating access conflicts for that resource between the pipeline stages. An output of each arbitration logic is connected to form stall control signals for controlling the selective stalling of the pipeline to avoid the resource access conflicts.

The resources could, for example, be registers or parts (e.g. fields) of registers.

By providing arbitration logic for each resource, an embodiment of the invention effectively enables a distribution of the control logic needed to anticipate potential resource access conflicts, and allows selectively stalling of the pipeline to avoid the conflicts from actually occurring. With this distributed, or modular, approach the overall logic can be kept relatively simple and easy to manage. Also, surprisingly, this can result in a reduction in the total logic needed. Consequently, less area, or so-called real estate, within an integrated circuit will be taken up by the pipeline protection mechanism than would be the case with the prior approaches described above. Moreover, as a result of the reduction in the amount of logic needed, the power consumption can be reduced, while still providing effective pipeline protection.

Preferably, the arbitration logic for each of the resources is derived from a generic arbitration logic determined for the pipeline. The generic function may itself be embodied in the integrated circuit as generic arbitration logic capable of handling simultaneous occurrence of all envisaged conflicts. Each of the arbitration logic blocks may fully embody the generic arbitration function, but will typically only embody different special forms of the generic arbitration function. The generic arbitration function provides a logical definition of all of the potential, or theoretical, conflicts which could occur between respective pipeline stages. In practice, it may not be physically possible for all of the theoretical conflicts to occur for each of the resources, since the resources concerned may not be accessible at all of the pipeline stages being monitored. However, configuring the respective arbitration logic blocks from a single, generic function simplifies the design of the logic for the individual resources, and provides consistent performance and testability.

The processing engine will typically include pipeline control logic for controlling the stages of the pipeline. This pipeline control logic can be connected to receive the stall control signals derived, or output, from the arbitration logic. Output merge logic can be provided for merging the output of each arbitration logic to form stall control signals for controlling the selective stalling of the pipeline to avoid the resource access conflicts.

The pipeline protection mechanism may comprise an access decoder stage connected to receive access information from at least selected pipeline stages to derive access information for respective protected resources. The arbitration logic for a protected resource can then be connected to receive access information for that protected resource from the access decoder stage. In this manner, the arbitration logic for each protected resource can receive the information it needs to perform a conflict check for that resource.

The decoder stage may include a plurality of access decoders, each access decoder being associated with a respective pipeline stage. Input merge logic can be provided for each protected resource to merge the access information for that resource from the various access decoders.

The access information can relate to pending accesses. It can also relate to current access. Indeed, a current access decoding stage can be connected to receive current access information from the pipeline to derive current access information for respective protected resources, the arbitration logic for a protected resource being connected to receive current access information for that protected resource as well as pending access information.

In an embodiment of the invention, the current access decoder stage is a decoder stage for a register file, whereby the logic for the register file is reused for the pipeline protection mechanism, thus providing a saving in the logic required for the processing engine.

Separate input merge logic can be provided for each protected resource and be connected to the arbitration logic for that resource.

The processing engine can be in the form of a digital signal processor. Alternatively, it could be in the form of a microprocessor, or any other form of processing engine employing a pipelined architecture. The processing engine can be implemented in the form of an integrated circuit.

A particular application for a processing engine in accordance with the present invention is in the form of a wireless telecommunications device, in particular a portable telecommunications device such as, for example, a mobile telephone, where low power consumption and high processing performance is required.

In accordance with another aspect of the invention there is provided a method of protecting a pipeline in a processing engine, which processing engine includes a processor pipeline with a plurality of pipeline stages and a plurality of resources. The method comprises, for respective protected resources, separately arbitrating for the resource to anticipate access conflicts between the pipeline stages, and selectively stalling the pipeline depending upon the result of the arbitration for the respective resources to avoid resource access conflicts.

BRIEF DESCRIPTION OF THE DRAWINGS

Particular embodiments in accordance with the invention will now be described, by way of example only, and with reference to the accompanying drawings in which like reference signs are used to denote like pans, unless otherwise stated, and in which:

Figure 1 is a schematic block diagram of a processor in accordance with an embodiment of the invention;
Figure 2 is a schematic diagram of a core of the processor of Figure 1;
Figure 3 is a more detailed schematic block diagram of various execution units of the core of the processor of Figure 1;
Figure 4 is schematic diagram of an instruction buffer queue and an instruction decoder controller of the processor of Figure 1;
Figure 5 is a representation of pipeline phases of the processor of Figure 1;
Figure 6 is a diagrammatic illustration of an example of operation of a pipeline in the processor of Figure 1;
Figure 7 is a schematic representation of the core of the processor for explaining the operation of the pipeline of the processor of Figure 1;
Figure 8A is an example of a read after write hazard;
Figure 8B is another example of a read after write hazard;
Figure 9 is an example of a write after write hazard;
Figure 10A is one example of a write after read hazard;
Figure 10B is another example of a write after read hazard;
Figure 11 illustrates possible conflicts at various pipeline stages;
Figure 12 illustrates the derivation of a generic arbitration function definition process;

Figure 13 is a schematic diagram of generic arbitration logic;

Figure 14 illustrates the architecture of a dual-pipeline arithmetic logic unit of a processing engine incorporating an embodiment of the invention;

Figure 15 is a schematic block diagram of an example of pipeline protection logic in accordance with the invention;

Figure 16 is an integrated circuit incorporating the processor of Figure 1; and

Figure 17 is an example of mobile telecommunications apparatus incorporating the processor of Figure 1.

DESCRIPTION OF PARTICULAR EMBODIMENTS

Although the invention finds particular application to Digital Signal Processors (DSPs), implemented for example in an Application Specific Integrated Circuit (ASIC), it also finds application to other forms of processing engines.

The basic architecture of an example of a processor according to the invention will now be described.

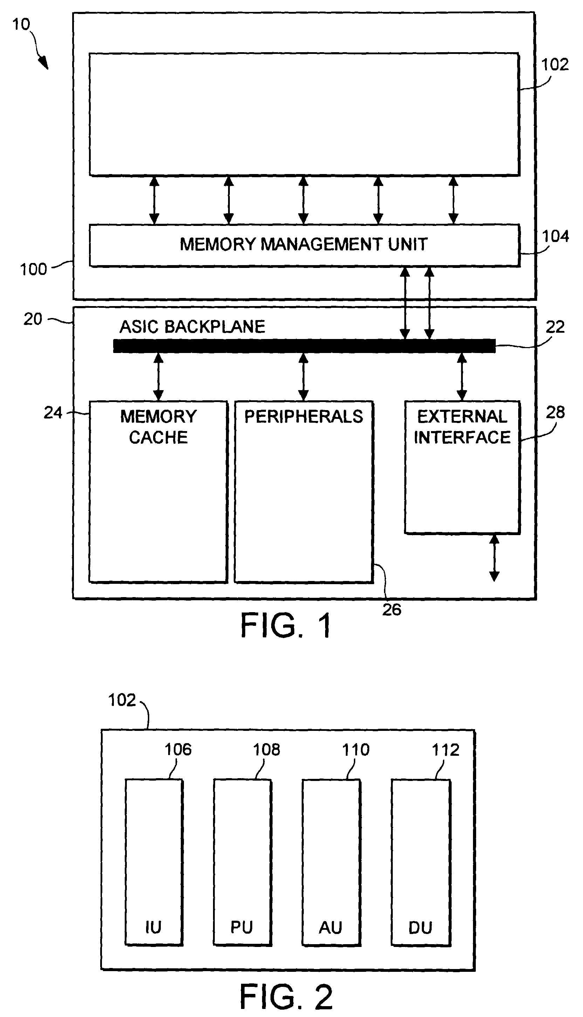

Figure 1 is a schematic overview of a processor 10 forming an exemplary embodiment of the present invention. The processor 10 includes a processing engine 100 and a processor backplane 20. In the present embodiment, the processor is a Digital Signal Processor 10 implemented in an Application Specific Integrated Circuit (ASIC).

As shown in Figure 1, the processing engine 100 forms a central processing unit (CPU) with a processing core 102 and a memory interface, or management, unit 104 for interfacing the processing core 102 with memory units external to the processor core 102.

The processor backplane 20 comprises a backplane bus 22, to which the memory management unit 104 of the processing engine is connected. Also connected to the backplane bus 22 is an instruction cache memory 24, peripheral devices 26 and an external interface 28.

It will be appreciated that in other embodiments, the invention could be implemented using different configurations and/or different technologies. For example, the processing engine 100 could form the processor 10, with the processor backplane 20 being separate therefrom. The processing engine 100 could, for example be a DSP separate from and mounted on a backplane 20 supporting a backplane bus 22, peripheral and external interfaces. The processing engine 100 could, for example, be a microprocessor rather than a DSP and could be implemented in technologies other than ASIC technology. The processing engine, or a processor including the processing engine, could be implemented in one or more integrated circuits.

Figure 2 illustrates the basic structure of an embodiment of the processing core 102. As illustrated, the processing core 102 includes four elements, namely an Instruction Buffer Unit (I Unit) 106 and three execution units. The execution units are a Program Flow Unit (P Unit) 108, Address Data Flow Unit (A Unit) 110 and a Data Computation Unit (D Unit) 112 for executing instructions decoded from the Instruction Buffer Unit (I Unit) 106 and for controlling and monitoring program flow.

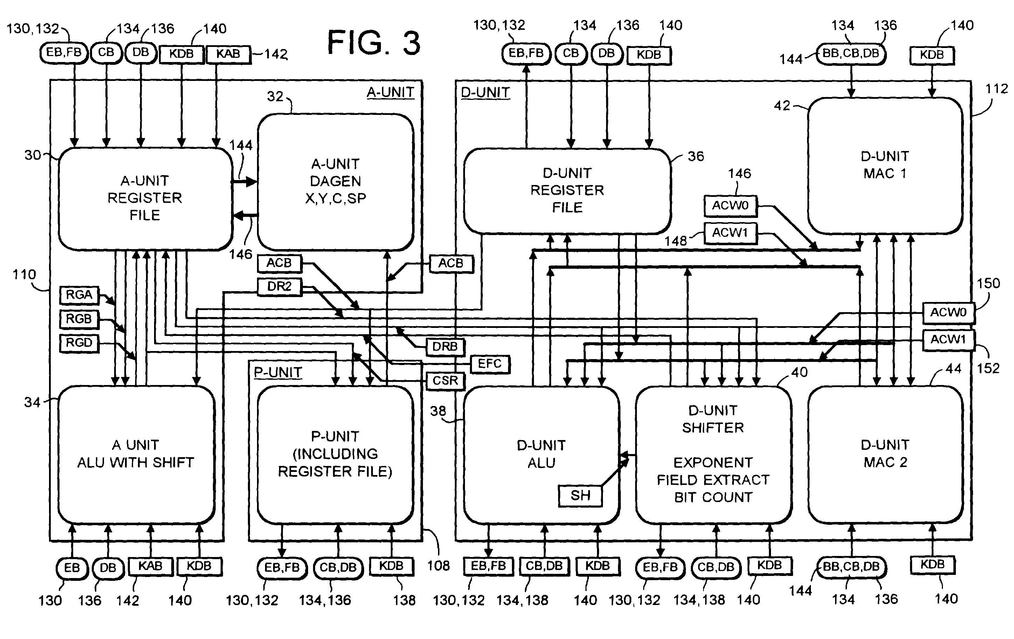

Figure 3 illustrates the P Unit 108, A Unit 110 and D Unit 112 of the processing core 102 in more detail and shows the bus structure connecting the various elements of the processing core 102. The P Unit 108 includes, for example, loop control circuitry, GoTo/Branch control circuitry and various registers for controlling and monitoring program flow such as repeat counter registers and interrupt mask, flag or vector registers. The P Unit 108 is coupled to general purpose Data Write busses (EB, FB) 130, 132, Data Read busses (CB, DB) 134, 136 and a coefficient program bus (BB) 138. Additionally, the P Unit 108 is coupled to sub-units within the A Unit 110 and D Unit 112 via various busses labeled CSR, ACB and RGD.

As illustrated in Figure 3, in the present embodiment the A Unit 110 includes a register file 30, a data address generation sub-unit (DAGEN) 32 and an Arithmetic and Logic Unit (ALU) 34. The A Unit register file 30 includes various registers, among which are 16 bit pointer registers (AR0, ..., AR7) and data registers (DR0, ..., DR3) which may also be used for data flow as well as address generation. Additionally, the register file includes 16 bit circular buffer registers and 7 bit data page registers. As well as the general purpose busses (EB, FB, CB, DB) 130, 132, 134, 136, a coefficient data bus 140 and a coefficient address bus 142 are coupled to the A Unit register file 30. The A Unit register file 30 is coupled to the A Unit DAGEN unit 32 by unidirectional busses 144 and 146 respectively operating in opposite directions. The DAGEN unit 32 includes 16 bit X/Y registers and coefficient and stack pointer registers, for example for controlling and monitoring address generation within the processing engine 100.

The A Unit 110 also comprises the ALU 34 which includes a shifter function as well as the functions typically associated with an ALU such as addition, subtraction, and AND, OR and XOR logical operators. The ALU 34 is also coupled to the general-purpose busses (EB, DB) 130, 136 and an instruction constant data bus (KDB) 140. The A Unit ALU is coupled to the P Unit 108 by a PDA bus for receiving register content from the P Unit 108 register file. The ALU 34 is also coupled to the A Unit register file 30 by busses RGA and RGB for receiving address and data register contents and by a bus RGD for forwarding address and data registers in the register file 30.

As illustrated, the D Unit 112 includes a D Unit register file 36, a D Unit ALU 38, a D Unit shifter 40 and two multiply and accumulate units (MAC1, MAC2) 42 and 44. The D Unit register file 36, D Unit ALU 38 and D Unit shifter 40 are coupled to busses (EB, FB, CB, DB and KDB) 130, 132, 134, 136 and 140, and the MAC units 42 and 44 are coupled to the busses (CB, DB, KDB) 134, 136, 140 and data read bus (BB) 144. The D Unit register file 36 includes 40-bit accumulators (AC0, ..., AC3) and a 16-bit transition register. The D Unit 112 can also utilize the 16 bit pointer and data registers in the A Unit 110 as source or destination registers in addition to the 40-bit accumulators. The D Unit register file 36 receives data from the D Unit ALU 38 and MACs 1&2 42, 44 over accumulator write busses (ACW0, ACW1) 146, 148, and from the D Unit shifter 40 over accumulator write bus (ACW1) 148. Data is read from the D Unit register file accumulators to the D Unit ALU 38, D Unit shifter 40 and MACs 1&2 42, 44 over accumulator read busses (ACR0, ACR1) 150, 152. The D Unit ALU 38 and D Unit shifter 40 are also coupled to sub-units of the A Unit 108 via various busses labeled EFC, DRB, DR2 and ACB.

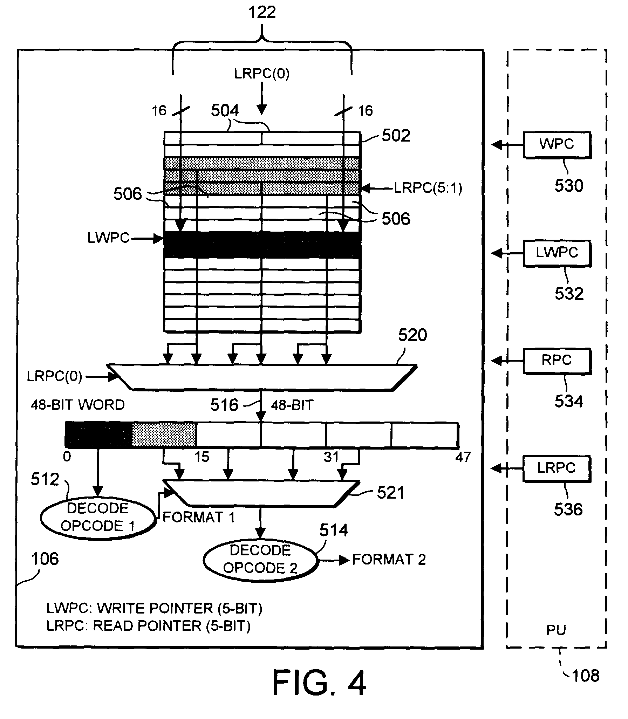

Referring now to Figure 4, there is illustrated an instruction buffer unit 106 comprising a 32 word instruction buffer queue (IBQ) 502. The IBQ 502 comprises 32×16 bit registers 504, logically divided into 8 bit bytes 506. Instructions arrive at the IBQ 502 via the 32-bit program bus (PB) 122. The instructions are fetched in a 32-bit cycle into the location pointed to by the Local Write Program Counter (LWPC) 532. The LWPC 532 is contained in a register located in the P Unit 108. The P Unit 108 also includes the Local Read Program Counter (LRPC) 536 register, and the Write Program Counter (WPC) 530 and Read Program Counter (RPC) 534 registers. LRPC 536 points to the location in the IBQ 502 of the next instruction or instructions to be loaded into the instruction decoder(s) 512 and 514. That is to say, the LRPC 534 points to the location in the IBQ 502 of the instruction currently being dispatched to the decoders 512, 514. The WPC points to the address in program memory of the start of the next 4 bytes of instruction code for the pipeline. For each fetch into the IBQ, the next 4 bytes from the program memory are fetched regardless of instruction boundaries. The RPC 534 points to the address in program memory of the instruction currently being dispatched to the decoder(s) 512 and 514.

The instructions are formed into a 48-bit word and are loaded into the instruction decoders 512, 514 over a 48-bit bus 516 via multiplexors 520 and 521. It will be apparent to a person of ordinary skill in the art that the instructions may be formed into words comprising other than 48-bits, and that the present invention is not limited to the specific embodiment described above.

The bus 516 can load a maximum of two instructions, one per decoder, during any one instruction cycle. The combination of instructions may be in any combination of formats, 8, 16, 24, 32, 40 and 48 bits, which will fit across the 48-bit bus. Decoder 1, 512, is loaded in preference to decoder 2, 514, if only one instruction can be loaded during a cycle. The respective instructions are then forwarded on to the respective function units in order to execute them and to access the data for which the instruction or operation is to be performed. Prior to being passed to the instruction decoders, the instructions are aligned on byte boundaries. The alignment is done based on the format derived for the previous instruction during decoding thereof. The multiplexing associated with the alignment of instructions with byte boundaries is performed in multiplexors 520 and 521.

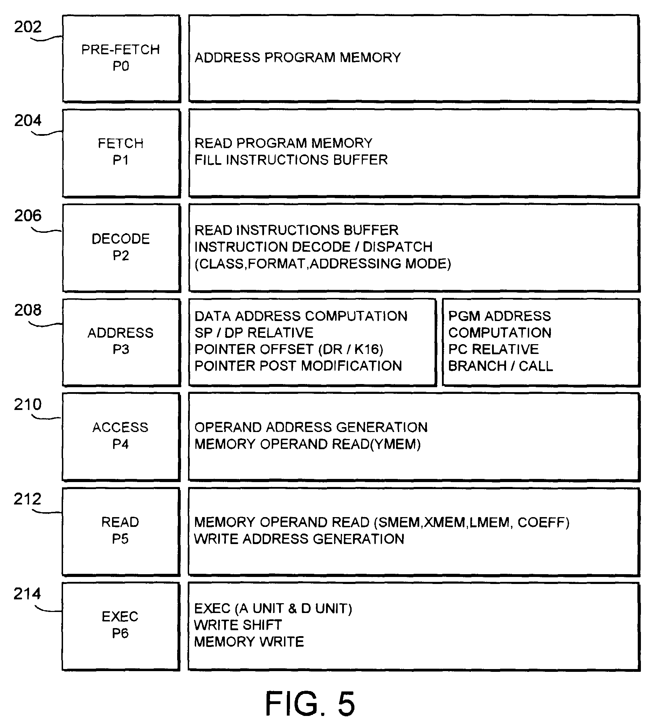

The processor core 102 executes instructions through a 7 stage pipeline, the respective stages of which will now be described with reference to Figure 5.

The first stage of the pipeline is a PRE-FETCH (P0) stage 202, during which stage a next program memory location is addressed by asserting an address on the address bus (PAB) 118 of a memory interface, or memory management unit 104.

In the next stage, FETCH (P1) stage 204, the program memory is read and the I Unit 106 is filled via the PB bus 122 from the memory management unit 104.

The PRE-FETCH and FETCH stages are separate from the rest of the pipeline stages in that the pipeline can be interrupted during the PRE-FETCH and FETCH stages to break the sequential program flow and point to other instructions in the program memory, for example for a Branch instruction.

The next instruction in the instruction buffer is then dispatched to the decoder/s 512/514 in the third stage, DECODE (P2) 206, where the instruction is decoded and dispatched to the execution unit for executing that instruction, for example to the P Unit 108, the A Unit 110 or the D Unit 112. The decode stage 206 includes decoding at least part of an instruction including a first part indicating the class of the instruction, a second part indicating the format of the instruction and a third part indicating an addressing mode for the instruction.

The next stage is an ADDRESS (P3) stage 208, in which the address of the data to be used in the instruction is computed, or a new program address is computed should the instruction require a program branch or jump. Respective computations take place in the A Unit 110 or the P Unit 108 respectively.

In an ACCESS (P4) stage 210 the address of a read operand is output and the memory operand, the address of which has been generated in a DAGEN X operator with an Xmem indirect addressing mode, is then READ from indirectly addressed X memory (Xmem).

The next stage of the pipeline is the READ (P5) stage 212 in which a memory operand, the address of which has been generated in a DAGEN Y operator with an Ymem indirect addressing mode or in a DAGEN C operator with coefficient address mode, is READ. The address of the memory location to which the result of the instruction is to be written is output.

In the case of dual access, read operands can also be generated in the Y path, and write operands in the X path.

Finally, there is an execution EXEC (P6) stage 214 in which the instruction is executed in either the A Unit 110 or the D Unit 112. The result is then stored in a data register or accumulator, or written to memory for Read/Modify/Write or store instructions. Additionally, shift operations are performed on data in accumulators during the EXEC stage.

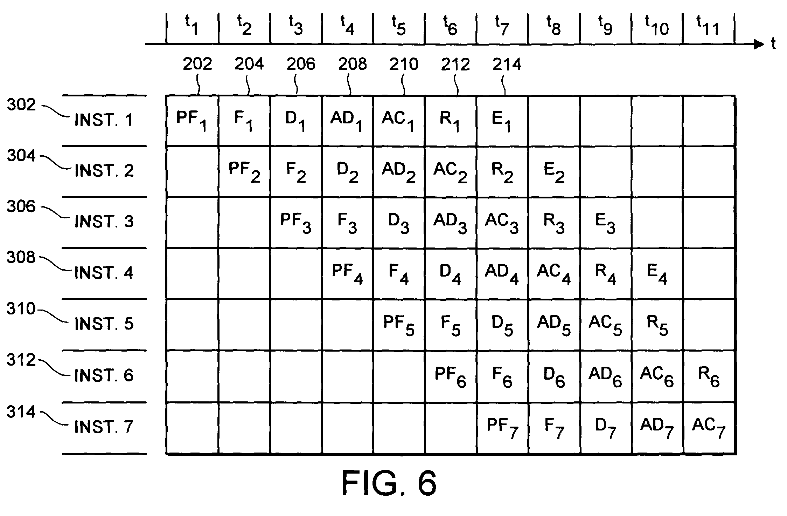

The basic principle of operation for a pipeline processor will now be described with reference to Figure 6. As can be seen from Figure 6, for a first instruction 302, the successive pipeline stages take place over time periods $T_1$-$T_7$. Each time period is a clock cycle for the processor machine clock. A second instruction 304, can enter the pipeline in period $T_2$, since the previous instruction has now moved on to the next pipeline stage. For instruction 3, 306, the PRE-FETCH stage 202 occurs in time period $T_3$. As can be seen from Figure 6 for a seven stage pipeline a total of 7 instructions may be processed simultaneously. For all 7 instructions 302-314, Figure 6 shows them all under process in time period $T_7$. Such a structure adds a form of parallelism to the processing of instructions.

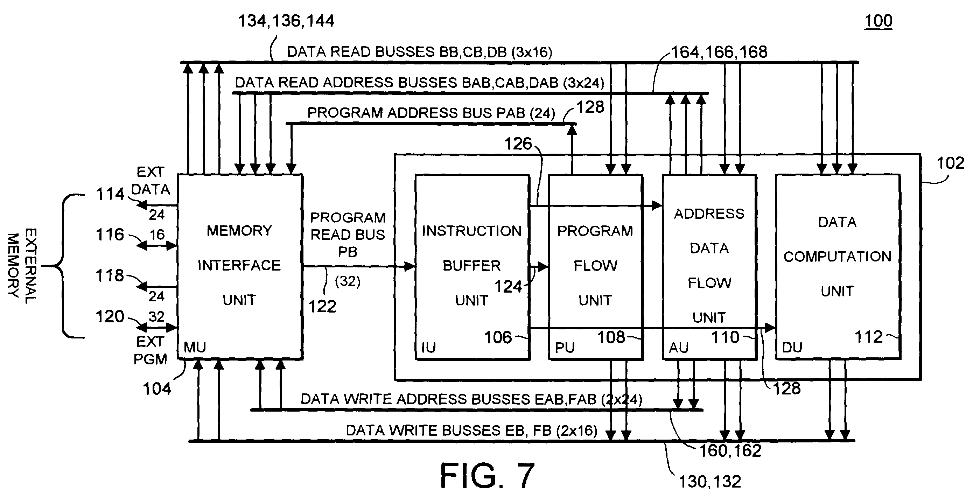

As shown in Figure 7, the present embodiment of the invention includes a memory management unit 104 which is coupled to external memory units via a 24 bit address bus 114 and a bi-directional 16 bit data bus 116. Additionally, the memory management unit 104 is coupled to program storage memory (not shown) via a 24 bit address bus 118 and a 32 bit bi-directional data bus 120. The memory management unit 104 is also coupled to the I Unit 106 of the machine processor core 102 via a 32 bit program read bus (PB) 122. The P Unit 108, A Unit 110 and D Unit 112 are coupled to the memory management unit 104 via data read and data write busses and corresponding address busses. The P Unit 108 is further coupled to a program address bus 128.

More particularly, the P Unit 108 is coupled to the memory management unit 104 by a 24 bit program address bus 128, the two 16 bit data write busses (EB, FB) 130, 132, and the two 16 bit data read busses (CB, DB) 134, 136. The A Unit 110 is coupled to the memory management unit 104 via two 24 bit data write address busses (EAB, FAB) 160, 162, the two 16 bit data write busses (EB, FB) 130, 132, the three data read address busses (BAB, CAB, DAB) 164, 166, 168 and the two 16 bit data read busses (CB, DB) 134, 136. The D Unit 112 is coupled to the memory management unit 104 via the two data write busses (EB, FB) 130, 132 and three data read busses (BB, CB, DB) 144, 134, 136.

Figure 7 represents the passing of instructions from the I Unit 106 to the P Unit 108 at 124, for forwarding branch instructions for example. Additionally, Figure 7 represents the passing of data from the I Unit 106 to the A Unit 110 and the D Unit 112 at 126 and 128 respectively.

A difficulty with the operation of a pipeline is that different instructions may need to make access to one and the same resource. Quite often, a first instruction will be operable to modify a resource, for example a register of a part, for example a field, of a register and a second instruction may then need to access that resource. If the instructions were being processed separately with the processing of the second instruction only being commenced when the processing of the first instruction has finished, this would not create a conflict. However, in a pipelined architecture, there is a possibility that a second instruction could access the resource before the first instruction has finished with it, unless measures are undertaken to prevent this.

Such potential conflicts are often termed "data hazards". Examples of possible data hazards are in cases of, for example:

- Read after Write (e.g.: ARx = ARy followed by *ARx = k16 )
- Write after Read (e.g.: ARx = ARy followed by mar(ARy=P16) )
- Write after Write (e.g.: ARx = ARy followed by mar(ARx=P16) )

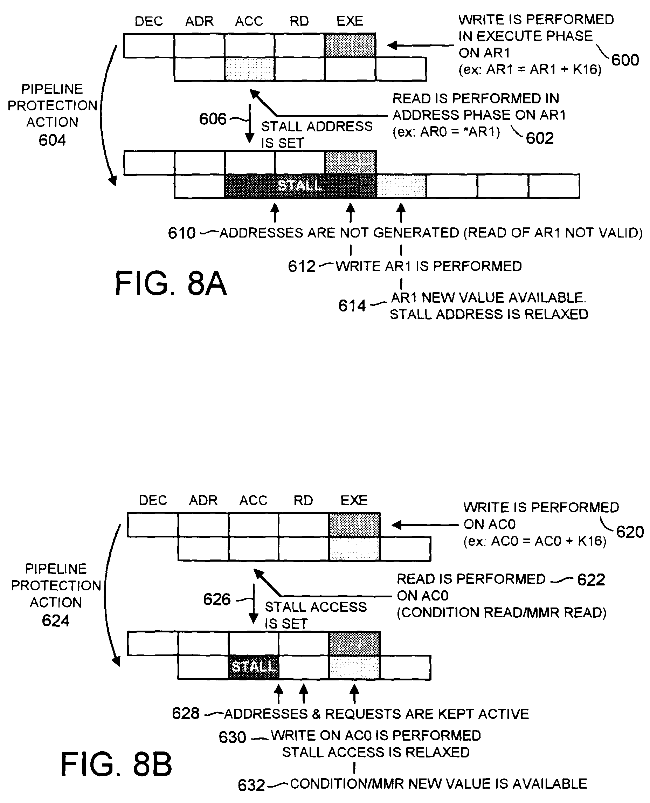

Figure 8A represents an example of a pipeline protection action for a Read After Write (RAW). Step 600 represents a write performed by a first instruction in an execute phase (EXE) on a register AR1 (e.g. AR1 = AR0 + K16 ). Step 602 represents a read performed in the address phase (ADR) on AR1 (e.g. AC0 = *AR1 ). A pipeline protection action (604) comprises setting a stall 606 for the address phase, whereby the addresses for the read are not generated at 610 (the read of AR1 is not valid) until after the write to AR1 is performed at 612, the new AR1 value being available and the stall for the address phase being relaxed (removed) at 614.

Figure 8B represents another example of a pipeline protection action for a Read After Write (RAW). Step 620 represents a write performed by a first instruction in an execute phase (EXE) on a register AR0 (e.g. AR0 = AC0 + K16 ). Step 602 represents a read performed in the read phase (RD) on AR0 (e.g. Condition Read/MMR read). A pipeline protection action (624) comprises setting a stall 626 for the access phase (ACC), whereby the addresses and requests are kept active at 628, a write on AC0 is performed at 630 and the stall of the access phase is relaxed (removed) and the Condition/MMR new value is available at 632.

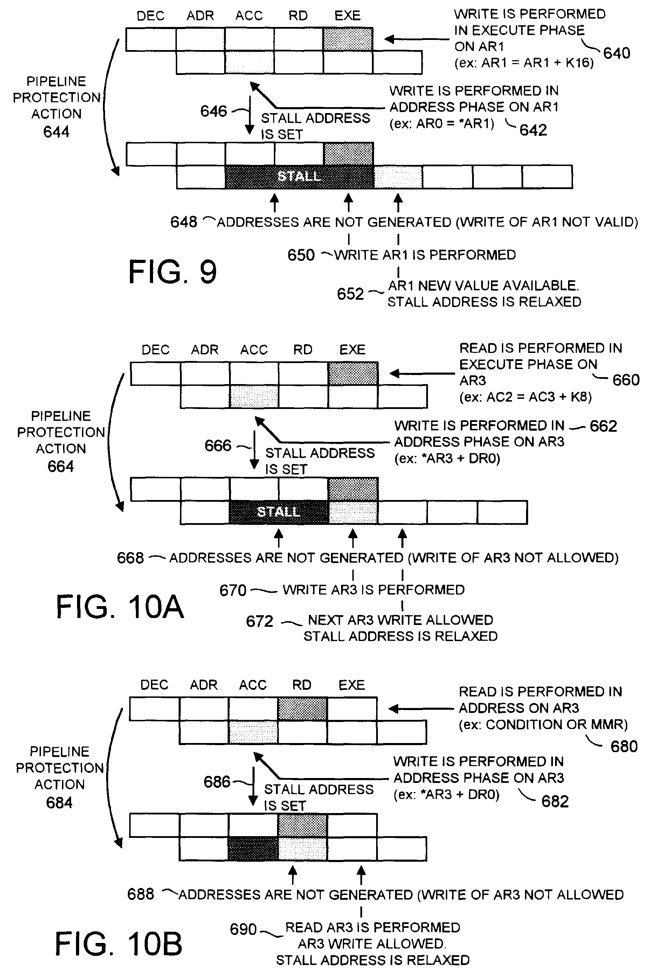

Figure 9 represents an example of a pipeline protection action for a Write After Write (WAW). Step 640 represents a write performed by a first instruction in an execute phase (EXE) on a register AR1 (e.g.

AR1 = AR0 + K16 ). Step 642 represents a write performed in the address phase (ADR) on AR1 (e.g. AC0 = *AR1+ ). A pipeline protection action (644) comprises setting a stall 646 for the address phase, whereby the addresses for the second write to AR1 are not generated at 650 (the write to AR1 is not allowed) until after the first write to AR1 is performed at 652, the new AR1 value being available and the stall for the address phase being relaxed (removed) at 654.

Figure 10A represents an example of a pipeline protection action for a Write After Read (WAR). Step 660 represents a read performed by a first instruction in a read phase (RD) on a register AR3 (e.g. AC2 = AR3 & K8 ). Step 662 represents a write performed in the address phase (ADR) on AR3 (e.g. *AR3+DR0). A pipeline protection action (664) comprises setting a stall 666 for the address phase, whereby the addresses for the write to AR3 are not generated at 670 (the write to AR3 is not allowed) until after the read of AR3 is performed at 672, the AR3 write being allowed and the stall for the address phase being relaxed (removed) at 674.

Figure 10B represents another example of a pipeline protection action for a Write After Read (WAR). Step 680 represents a read performed by a first instruction in a read phase (RD) on a register AR3 (e.g. Condition or MMR). Step 682 represents a write performed in the address phase (ADR) on AR3 (e.g. *AR3 + DR0). A pipeline protection action (684) comprises setting a stall 686 for the address phase, whereby the addresses for the write to AR3 are not generated at 690 (the write to AR3 is not allowed) until after the read of AR3 is performed at 690, the write to AR3 then being allowed and the stall for the address phase being relaxed (removed).

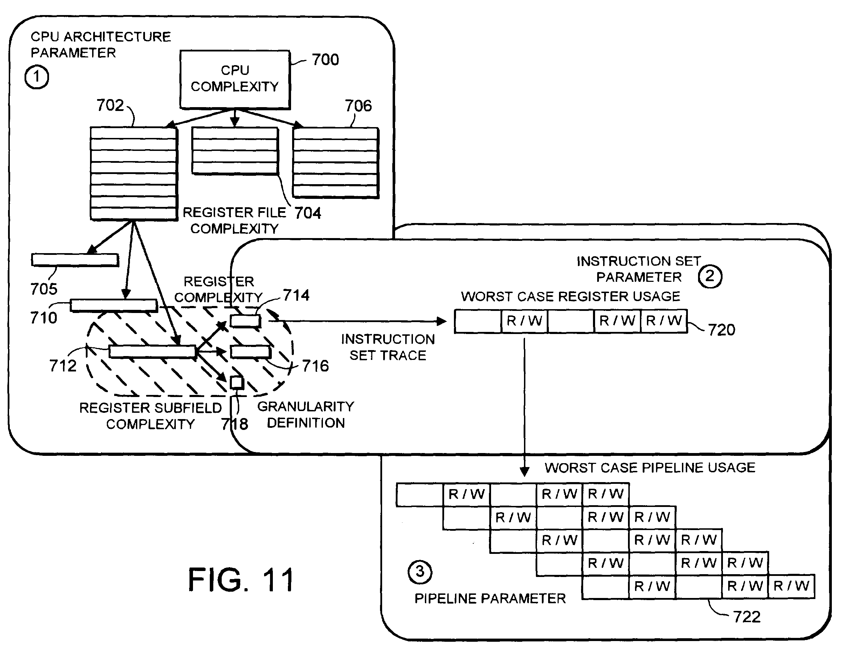

Figure 11 is a schematic of an approach adopted for determining a definition of a generic arbitration function of all possible resource access conflicts of the pipeline. The generic arbitration function is an abstract concept which underpins and simplifies the design of each arbitration logic, which can all be implemented as special forms of the generic function. Logic in which the generic arbitration function is embedded may also be included in the processing engine. The generic arbitration function can also aid circuit testing at the end of the circuit design. Although described in the context of the present embodiment, this approach could be used for other processor architectures.

Referring to Figure 11, in an initial stage the organization (700) of the processing engine as a whole is divided into groups of registers, or register files (e.g. 702, 704, 706). In the present example, three register files exist for the program unit, or control flow (CF), for the data unit (DU) and for the address unit (AU). Each of the register files comprises a number of registers N(i) (e.g., 708, 710, 712). These registers can form the resources to be protected. As well as, or instead of, protecting whole registers, it may be desired to protect parts of (or fields within) registers (e.g. 714, 716, 718).

Figure 11 represents this definition of resource granularity. Accordingly, a protected resource could, for example, be a register or a field within a register.

For each protected resource, an analysis of the worst possible resource usage is derived. Different instructions will provide different ways of reading from and writing to a resource, for example. As shown in Figure 11 in respect of register field 714, the pipeline stages represented at 720 in which read/write operations could be performed for that resource are stages P3, P5 and P6. In other words, the worst case resource usage for this resource is in respect of pipeline stages P3, P5 and P6. The above accesses can be classified in terms of their execution stages.

The pipeline depth (e.g., here pipeline stages P2, P3, P4, P5 and P6) has to be taken into account to consider the instruction execution overlap, as represented at 722 for five instructions I0, I1, I2, I3 and I4.

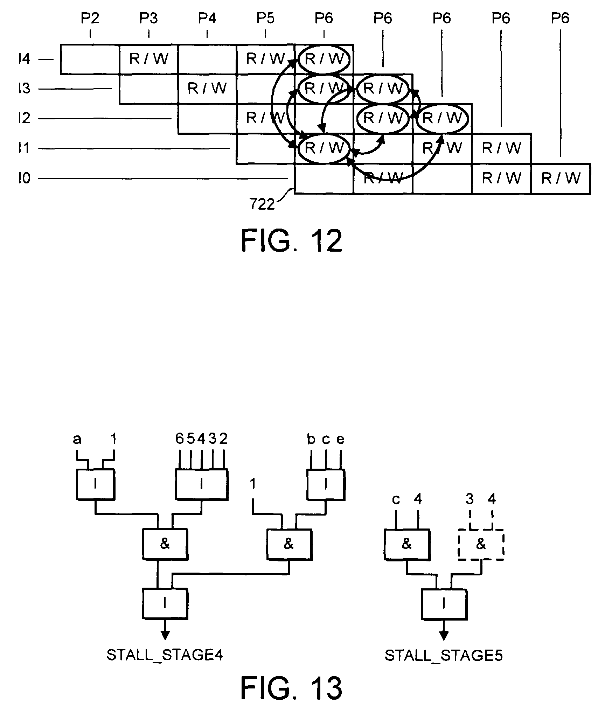

All potential data hazards are considered as represented by the arrows in Figure 12, which Figure is a schematic diagram illustrating potential conflicts at different stages of a pipeline. Figure 12 illustrates the five stages P2 - P6 of Figure 5 for each of the four instructions I0, I1, I2 and I3 and I4.

From the consideration of the data hazards found, a generic arbitration function can be derived as illustrated in Figure 13, this generic arbitration function defining relationships between current and pending accesses. The generic arbitration function can then be used to control the selective stalling of the pipeline to avoid data hazards. The generic logic is representative of all potential resource access conflicts for the pipeline. From an analysis of the potential conflict problems represented schematically in Figure 12, the following signals susceptible to resulting in a conflict can be identified, namely:

    a: current read stage 4
    b: pending (stage 5) read stage 7
    c: pending (stage 5) read stage 6
    d: current read stage 6
    e: pending (stage 6) read stage 7
    f: current read stage 7
    1: current write stage 4
    2: pending (stage 5) write stage 7
    3: pending (stage 5) write stage 6
    4: pending (stage 6) write stage 7
    5: current write stage 6
    6: current write stage 7

The logic for interpreting these signals is illustrated in Figure 13. It will be noted that signals "d" and "f" are not shown in Figure 13. These signals are not, however, needed as all potential conflicts dealing with a 7-stage read are solved by anticipating using the pending signals "b" and "e". Accordingly, these signals do not need to be represented in Figure 13 as any conflicts related thereto can already be predicted.

It will thus be appreciated that in general the generic function will have a large number of variable operands and that each arbitration logic will be a special form or sub-set of the generic function with a lower degree of degeneracy, i.e. with a number of the operands which are variable in the generic function being fixed.

Once determined, the generic arbitration function can be used to implement the circuit design of each of the arbitration logic blocks, which are all definable as special forms of the generic arbitration function. The full generic form is not needed for the arbitration logic of each individual resource, since, for each of the resources, it will in general be impossible for some of the conflicts envisaged by the generic arbitration function to occur.

Generic arbitration logic embodying the generic arbitration function need only be provided in the processing engine if full protection is desired against simultaneous occurrence of all envisaged conflicts.

The concept of the generic arbitration function can be further exploited at the stage of software testing of the hardware design of the processing engine. In general, generating all the test patterns for pipeline processing engine hardware can be a huge undertaking because of the complexity of the CPU, its instruction set and architecture. The test patterns need to be defined in terms of a prespecified reference. It is the specification of this reference which can be highly laborious. With the present design, a functional test pattern generator can be created using the generic function as the reference in association with a conventional instruction set latency table. This simplifies the creation of the test pattern generator since the scope of the testing can be restricted to the possible conflicts envisaged by the generic function. Because the test pattern generator follows directly from the generic function, the process of hardware design testing is not only quicker, but also more systematic and ensures good coverage.

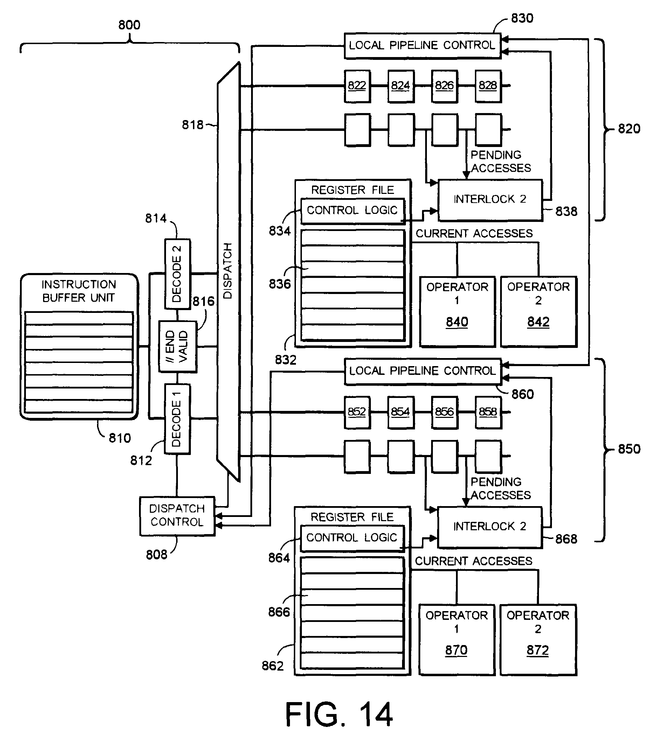

Figure 14 is a schematic overview of an interlocked architecture for a processing engine. As shown in Figure 14, there are first and second pipelines 820 and 850, receiving instructions from a control flow 800. In terms of Figure 2, the first pipeline could be the D unit and the second pipeline could be the A unit, for example.

The control flow includes an instruction buffer 810 and first and second decoders 812 and 814, for decoding first and second instruction streams. A parallel encoding validity check is effected in parallel verification logic 816, to ensure that the parallel context is valid. The instructions from the decoders 812 and 814 are dispatched from dispatch logic 818 under the control of a dispatch controller 808.

In the first pipeline 820, successive pipeline stages 822, 824, 826 and 828 are under the control of a local pipeline controller 830. Associated with the first pipeline 820 is first local interlock control logic 838 forming a first local interlock controller. The pipeline controller is responsive to control signals from the associated interlock control logic to cause selective stalling of the pipelines stages. This is responsive to outputs from the pipeline 820 and also to outputs from a register file 832 for the pipeline 820. The register file 832 includes register file control logic 834 and individual registers 836. One or more operators 840 and 842 may be accessed in respect of a current access operation.

In the second pipeline 850, successive pipeline stages 852, 854, 856 and 858 are under the control of a local pipeline controller 860. Associated with the second pipeline 850 is second local interlock control logic 868 forming a second local interlock controller. The pipeline controller is responsive to control signals from the associated interlock control logic to cause selective stalling of the pipeline stages. This is responsive to outputs from the pipeline 850 and also to outputs from a register file 862 for the pipeline 850. The register file 862 includes register file control logic 864 and individual registers 866. One or more operators 870 and 872 may be accessed in respect of a current access operation.

It will be noted that each of the local pipeline controllers 830 and 860 is responsive to outputs from each of the local interlock controllers 838 and 868. This general principle is extendible. Accordingly, where more than two pipelines are provided, the local pipeline controller for each pipeline will be responsive to the outputs from all of the local interrupt controllers.

Thus, in Figure 14, the natural partitioning of the interlock control is the same as for the register files. However, this need not be the case and it may be desirable to move an individual interlock control (e.g., 838 or 868) from its original register file to another depending on the arbitration function information location (pending verses current accesses).

As mentioned above, in the present embodiment, there are three register files, namely for the control flow (CF), for the D unit (DU) and for the A unit (AU). Accordingly three sets of local interlock control logic are provided. The physical location of the control logic is, however, distributed such that pending and/or current accesses information is mainly located at the respective location (AU,CF). For the D unit, the interlock logic is moved to the control flow unit, where the biggest percentage of signals for control is pending in the instruction pipeline. By re-using as much as possible current accesses of the register files the logic overhead can be minimized. Stalls which are generated are spread within all the CPU sub-units having a pipeline and the associated local pipeline control logic.

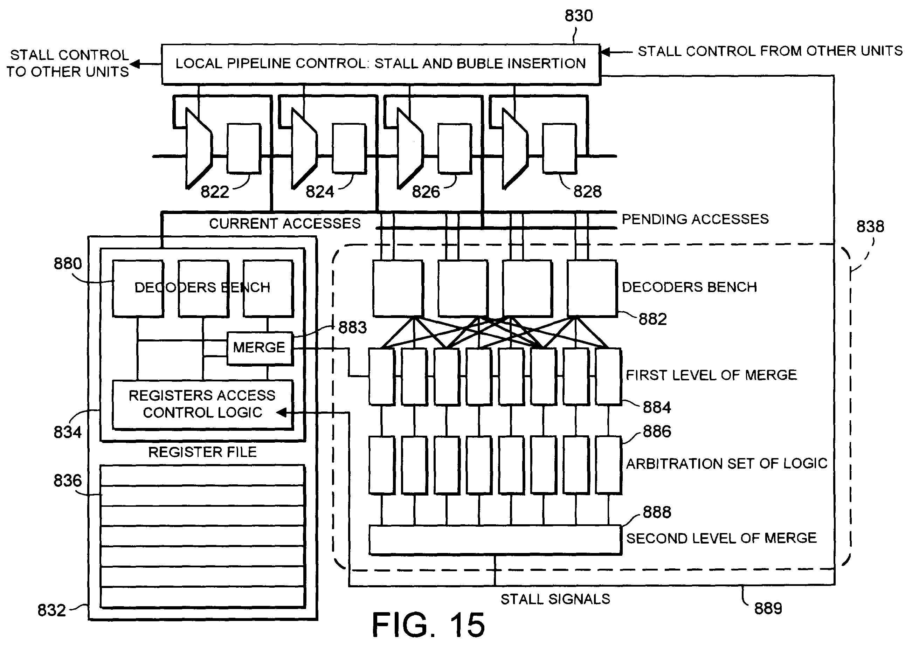

A schematic overview of an exemplary structure for an interlock control mechanism is illustrated in Figure 15, for example, for the pipelines 820 of Figure 14. It will be understood that the mechanism could have the same structure for other pipelines, such as the pipeline 850 of Figure 14. It will be noted that no memory elements (read/write queue) are provided for stall management as the instruction pipeline itself is used to achieve this. For example, a write after write conflict from stage P4 to stage P7 of the pipeline between two consecutive instructions should generate a 3 cycle stall (at stage 4). In practice, the interlock logic generates 3 x 1 cycle consecutive stalls (at stage 4).

Figure 15 illustrates a regular and parallel structure for hazard detection, including:

- A first level comprises basic decoders 882 (from pending signals or current accesses). These decoders are the same as decoders 880 in the register files but are applied on the pending signals. The decoder logic is responsive to access information from at least selected pipeline stages to derive access information for respective protected resources. The decoders 882 are operable to decode pending access information. The decoders 880 are operable to decode current accesses.
- A second level comprises a stage 884 of merging of the equivalent signals (in the arbitration function sense) for each register to protect. This is achieved by ORing those signals in OR gates, for example using logic as illustrated in Figure 13. The output of the decoders 880 for current accesses are merged in merge logic 883, and then are supplied to merge logic 884, where they are merged with the output of the decoders 882 for pending access.
- A third level is composed of as many sets of arbitration logic 886 as there are registers to protect. The arbitration logic is extracted from the generic arbitration function illustrated in Figure 13, according to the inputs thereto (i.e. it forms a sub-set of the arbitration logic of Figure 13), and is applied (reduced) to each register access trace. The register access traces are formed from incoming signals specifying an access/phase.
- A fourth level is simply the merge 888 of all the arbitration results, for example using OR gates. Each set of arbitration logic generates between 1 and 3 stalls (at stages 3, 4 and 5). All the stalls of the same stage are merged together. The merged output signals are supplied as stall control signals 889 to the associated pipeline control logic for controlling selective stalling of the pipeline.

The stall control signals 889 are also supplied to register access control logic 890 current access control. Stall penalty reduction is not considered in this architecture, with the result that any conflict will result in an appropriate pipeline stall, that is a freeze of the lower stages and bubble insertion at the next stage.

The arbitration logic is relatively simple in hardware as a result of its 'logic re-use'. By logic re-use it is meant that the arbitration logic makes use of tapping from the queue of the existing main pipeline 822 - 828 (rather than creation of a new queue for arbitration purposes which has been previously proposed) and also makes use of the results from the decoders 880, in the embodiment through the merge logic 883. Consequently, the additional amount of hardware required for the arbitration logic blocks is greatly reduced. In a specific hardware implementation of the embodiment as a DSP integrated circuit, all the arbitration logic covers less than 2% of the total CPU area. By contrast, it is estimated that without logic re-use the chip area required for the logic necessary to provide a comparable level of pipeline protection would be at least several times greater, perhaps an order of magnitude greater.

There has been described a pipeline protection mechanism which, as a result of its regularity and generality is straightforward to implement and to test. Queuing of read/write pendings (pending operations) is handled by the pipeline itself. Thus the interlock detection logic is purely combinatorial and does not require a read/write queue as part of the interlock mechanism.

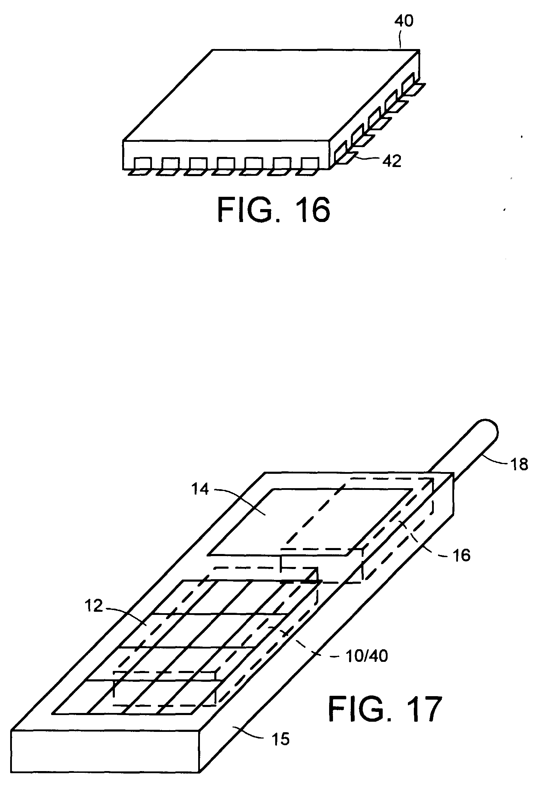

Figure 16 is a schematic representation of an integrated circuit 40 incorporating the processor 10 of Figure 1. The integrated circuit can be implemented using application specific integrated circuit (ASIC) technology. As shown, the integrated circuit includes a plurality of contacts 42 for surface mounting. However, the integrated circuit could include other configurations, for example a plurality of pins on a lower surface of the circuit for mounting in a zero insertion force socket, or indeed any other suitable configuration.

One application for a processing engine such as the processor 10, for example as incorporated in an integrated circuit as in Figure 16, is in a telecommunications device, for example a mobile wireless telecommunications device. Figure 17 illustrates one example of such a telecommunications device. In the specific example illustrated in Figure 17, the telecommunications device is a mobile telephone 11 with integrated user input device such as a keypad, or keyboard 12 and a display 14. The display could be implemented using appropriate technology, as, for example, a liquid crystal display or a TFT display. The processor 10 is connected to the keypad 12, where appropriate via a keyboard adapter (not shown), to the display 14, where appropriate via a display adapter (not shown), and to a telecommunications interface or transceiver 16, for example a wireless telecommunications interface including radio frequency (RF) circuitry. The radio frequency circuitry could be incorporated into, or separate from, an integrated circuit 40 comprising the processor 10. The RF circuitry 16 is connected to an aerial 18.

It will be appreciated that although particular embodiments of the invention have been described, many modifications/additions and/or substitutions may be made within the scope of the present invention.

## Claims

1. A processing engine including a processor pipeline with a plurality of pipeline stages, a plurality of resources and a pipeline protection mechanism, the pipeline protection mechanism comprising, for each protected resource, an arbitration logic for anticipating access conflicts for that resource between the pipeline stages, an output of each arbitration logic being connected to form stall control signals for selective stalling of stages of the pipeline to avoid resource access conflicts.

2. A processing engine according to claim 1, wherein each arbitration logic is definable as a specific form of a single, generic arbitration function.

3. A processing engine according to claim 2, wherein the generic arbitration function is embedded in generic arbitration logic of the processing engine.

4. A processing engine according to any preceding claim, including pipeline control logic for controlling the stages of the pipeline, the pipeline control logic being connected to receive the stall control signals output from the arbitration logic.

5. A processing engine according to any preceding claim, wherein the pipeline protection mechanism comprises output merge logic for merging the output of each arbitration logic to form stall control signals for controlling the selective stalling of the pipeline to avoid resource access conflicts.

6. A processing engine according to any preceding claim, wherein each arbitration logic is connected to receive access information from the pipeline.

7. A processing engine according to claim 6, wherein each arbitration logic is also connected to receive further control signals related to the protected resource associated with the arbitration logic concerned.

8. A processing engine according to any preceding claim and comprising an decoder stage connected to receive access information from the pipeline to derive access information for respective ones of the protected resources.

9. A processing engine according to claim 7 or claim 8, wherein the further control signals are outputs from the decoder stage.

10. A processing engine according to claim 6, wherein the decoder stage includes a plurality of access decoders, each access decoder being associated with a respective pipeline stage, and wherein the pipeline protection mechanism comprises, for at least one protected resource, input merge logic for merging the access information for that resource from the access decoders.

11. A processing engine according to claim 10, wherein the access information relates to pending accesses.

12. A processing engine according to claim 11, further comprising a current access decoder stage connected to receive current access information from the pipeline to derive current access information for respective protected resources, the arbitration logic for a protected resource being further connected to receive current access information for that protected resource.

13. A processing engine according to claim 12, wherein the current access decoder stage is a decoder stage for a register file.

14. A processing engine according to claim 12 or claim 13, wherein the current access information is also supplied to the input merge logic.

15. A processing engine according to any one of claims 10 to 13, comprising, for each protected resource, respective input merge logic for that resource.

16. A processing engine according to any preceding claim, wherein at least one resource is one of: a group of registers; a register; a field of a register; and a sub-field of a register.

17. A processing engine according to any preceding claim in the form of a digital signal processor.

18. An integrated circuit including a processing engine according to any preceding claim.

19. Telecommunications apparatus comprising a processing engine according to any one of claims 1 to 17.

20. Telecommunications apparatus according to claim 19, comprising a user input device, a display, a wireless telecommunications interface and an aerial.

21. A method of protecting a pipeline in a processing engine, which processing engine includes a processor pipeline with a plurality of pipeline stages and a plurality of resources, the method comprising, for respective protected resources, separately arbitrating for the resource to anticipate access conflicts between the pipeline stages, and selectively stalling stages of the pipeline depending upon the result of the arbitration for the respective resources to avoid resource access conflicts.

**22.** A method according to claim 21, wherein arbitration logic for each protected resource is derived from a generic arbitration function.

**23.** A method according to claim 22, wherein the generic arbitration function is representative of all potential resource access conflicts for the pipeline.

**24.** A method according to any one of claims 21 to 23, wherein access information from at least selected pipeline stages is decoded to derive access information for respective protected resources.

**25.** A method according to claim 24, wherein, for at least one protected resource, access information for a plurality of pipeline stages is merged for arbitration by arbitration logic for that resource.

**26.** A method according to claim 25, wherein the access information relates to pending accesses.

**27.** A method according to claim 26, wherein further access information also relates to current resource accesses.

**28.** A method according to any one of claims 21 to 27, wherein at least one resource is one of: a group of registers; a register; a field of a register; and a subfield of a register.

**29.** A method of software testing a hardware design of a multi-stage pipeline processor having a generic function defining possible conflicts between the pipeline stages of the processor, the method comprising:

applying the generic function together with an instruction set latency table to create a test pattern generator; and
applying the test pattern generator to test the hardware design.

FIG. 1

FIG. 2

FIG. 3

FIG. 4

| | | |
|---|---|---|
| **202** | PRE-FETCH P0 | ADDRESS PROGRAM MEMORY |
| **204** | FETCH P1 | READ PROGRAM MEMORY<br>FILL INSTRUCTIONS BUFFER |
| **206** | DECODE P2 | READ INSTRUCTIONS BUFFER<br>INSTRUCTION DECODE / DISPATCH<br>(CLASS,FORMAT,ADDRESSING MODE) |
| **208** | ADDRESS P3 | DATA ADDRESS COMPUTATION<br>SP / DP RELATIVE<br>POINTER OFFSET (DR / K16)<br>POINTER POST MODIFICATION | PGM ADDRESS<br>COMPUTATION<br>PC RELATIVE<br>BRANCH / CALL |
| **210** | ACCESS P4 | OPERAND ADDRESS GENERATION<br>MEMORY OPERAND READ(YMEM) |
| **212** | READ P5 | MEMORY OPERAND READ (SMEM,XMEM,LMEM, COEFF)<br>WRITE ADDRESS GENERATION |
| **214** | EXEC P6 | EXEC (A UNIT & D UNIT)<br>WRITE SHIFT<br>MEMORY WRITE |

# FIG. 5

EP 0 992 896 A1

| | $t_1$ | $t_2$ | $t_3$ | $t_4$ | $t_5$ | $t_6$ | $t_7$ | $t_8$ | $t_9$ | $t_{10}$ | $t_{11}$ |
|---|---|---|---|---|---|---|---|---|---|---|---|
| | 202 | 204 | 206 | 208 | 210 | 212 | 214 | | | | |
| INST. 1 | $PF_1$ | $F_1$ | $D_1$ | $AD_1$ | $AC_1$ | $R_1$ | $E_1$ | | | | |
| INST. 2 | | $PF_2$ | $F_2$ | $D_2$ | $AD_2$ | $AC_2$ | $R_2$ | $E_2$ | | | |
| INST. 3 | | | $PF_3$ | $F_3$ | $D_3$ | $AD_3$ | $AC_3$ | $R_3$ | $E_3$ | | |
| INST. 4 | | | | $PF_4$ | $F_4$ | $D_4$ | $AD_4$ | $AC_4$ | $R_4$ | $E_4$ | |
| INST. 5 | | | | | $PF_5$ | $F_5$ | $D_5$ | $AD_5$ | $AC_5$ | $R_5$ | |
| INST. 6 | | | | | | $PF_6$ | $F_6$ | $D_6$ | $AD_6$ | $AC_6$ | $R_6$ |
| INST. 7 | | | | | | | $PF_7$ | $F_7$ | $D_7$ | $AD_7$ | $AC_7$ |

FIG. 6

FIG. 7

EP 0 992 896 A1

DEC   ADR   ACC   RD   EXE

WRITE IS PERFORMED IN EXECUTE PHASE ON AR1 (ex: AR1 = AR1 + K16) 600

PIPELINE PROTECTION ACTION 604

606 — STALL ADDRESS IS SET

READ IS PERFORMED IN ADDRESS PHASE ON AR1 (ex: AR0 = *AR1) 602

STALL

610 — ADDRESSES ARE NOT GENERATED (READ OF AR1 NOT VALID)

612 — WRITE AR1 IS PERFORMED

614 — AR1 NEW VALUE AVAILABLE. STALL ADDRESS IS RELAXED

# FIG. 8A

DEC   ADR   ACC   RD   EXE

WRITE IS PERFORMED ON AC0 (ex: AC0 = AC0 + K16) 620

PIPELINE PROTECTION ACTION 624

626 — STALL ACCESS IS SET

READ IS PERFORMED — 622 ON AC0 (CONDITION READ/MMR READ)

STALL

628 — ADDRESSES & REQUESTS ARE KEPT ACTIVE

630 — WRITE ON AC0 IS PERFORMED STALL ACCESS IS RELAXED

632 — CONDITION/MMR NEW VALUE IS AVAILABLE

# FIG. 8B

| DEC | ADR | ACC | RD | EXE |
|-----|-----|-----|----|-----|

WRITE IS PERFORMED IN EXECUTE PHASE ON AR1 ～640
(ex: AR1 = AR1 + K16)

PIPELINE PROTECTION ACTION 644

646 ～ STALL ADDRESS IS SET

WRITE IS PERFORMED IN ADDRESS PHASE ON AR1 (ex: AR0 = *AR1) ～642

STALL

648 ～ ADDRESSES ARE NOT GENERATED (WRITE OF AR1 NOT VALID)

650 ～ WRITE AR1 IS PERFORMED

652 ～ AR1 NEW VALUE AVAILABLE. STALL ADDRESS IS RELAXED

## FIG. 9

| DEC | ADR | ACC | RD | EXE |
|-----|-----|-----|----|-----|

READ IS PERFORMED IN EXECUTE PHASE ON AR3 ～660
(ex: AC2 = AC3 + K8)

PIPELINE PROTECTION ACTION 664

666 ～ STALL ADDRESS IS SET

WRITE IS PERFORMED IN ─ 662 ADDRESS PHASE ON AR3 (ex: *AR3 + DR0)

STALL

668 ～ ADDRESSES ARE NOT GENERATED (WRITE OF AR3 NOT ALLOWED)

670 ～ WRITE AR3 IS PERFORMED

672 ～ NEXT AR3 WRITE ALLOWED STALL ADDRESS IS RELAXED

## FIG. 10A

| DEC | ADR | ACC | RD | EXE |
|-----|-----|-----|----|-----|

READ IS PERFORMED IN ADDRESS ON AR3 (ex: CONDITION OR MMR) ～ 680

PIPELINE PROTECTION ACTION 684

686 ～ STALL ADDRESS IS SET

WRITE IS PERFORMED IN ADDRESS PHASE ON AR3 (ex: *AR3 + DR0) ～ 682

688 ～ ADDRESSES ARE NOT GENERATED (WRITE OF AR3 NOT ALLOWED

690 ～ READ AR3 IS PERFORMED AR3 WRITE ALLOWED. STALL ADDRESS IS RELAXED

## FIG. 10B

FIG. 11

FIG. 12

STALL_STAGE4    STALL_STAGE5

FIG. 13

FIG. 14

FIG. 15

FIG. 16

FIG. 17

**European Patent Office**

## EUROPEAN SEARCH REPORT

Application Number

EP 98 40 2466

### DOCUMENTS CONSIDERED TO BE RELEVANT

| Category | Citation of document with indication, where appropriate, of relevant passages | Relevant to claim | CLASSIFICATION OF THE APPLICATION |
|---|---|---|---|
| X | PAVER N C ET AL: "REGISTER LOCKING IN AN ASYNCHRONOUS MICROPROCESSOR" PROCEEDINGS OF THE INTERNATIONAL CONFERENCE ON COMPUTER DESIGN: VLSI IN COMPUTERS AND PROCESSORS, CAMBRIDGE, MA., OCT. 11 - 14, 1992, 11 October 1992 (1992-10-11), pages 351-355, XP000344641 INSTITUTE OF ELECTRICAL AND ELECTRONICS ENGINEERS | 1,4-9, 16-19, 21,24-28 | G06F9/38 G06F11/263 |
| A | * section 3 * | 13 | |
| X | EP 0 649 085 A (CYRIX CORP) 19 April 1995 (1995-04-19) | 1,4,6-9, 16-19, 21,24, 26-28 | |
| A | * sections 2, 3, 6, 8.8; figures 4, 14a,b * | 13 | |
| A | SHIMAMURA K ET AL: "A SUPERSCALAR RISC PROCESSOR WITH PSEUDO VECTOR PROCESSING FEATURE" INTERNATIONAL CONFERENCE ON COMPUTER DESIGN: VLSI IN COMPUTERS AND PROCESSORS, AUSTIN, OCT. 2 - 4, 1995, 2 October 1995 (1995-10-02), pages 102-109, XP000631900 INSTITUTE OF ELECTRICAL AND ELECTRONICS ENGINEERS * section 4.2, figure 8 * | | TECHNICAL FIELDS SEARCHED<br><br>G06F<br>G01R<br>G11C |

-/--

The present search report has been drawn up for all claims

| Place of search | Date of completion of the search | Examiner |
|---|---|---|
| THE HAGUE | 13 September 1999 | Klocke, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EUROPEAN SEARCH REPORT

| | European Patent Office | | Application Number |
|---|---|---|---|
| | | EUROPEAN SEARCH REPORT | EP 98 40 2466 |

### DOCUMENTS CONSIDERED TO BE RELEVANT

| Category | Citation of document with indication, where appropriate, of relevant passages | Relevant to claim | CLASSIFICATION OF THE APPLICATION |
|---|---|---|---|
| A | P. KOGGE: "The architecture of pipelined computers" 1981 , HEMISPHERE PUBLISHING CORP. , WASHINGTON, US XP002096561 pages 220-225 * page 222 , lines 32-36; page 224, lines 9-13 * | 1,22 | |
| X | IWASHITA, H. ET AL: "Integrated design and test assistance for pipeline controllers" IEICE TRANSACTIONS ON INFORMATION AND SYSTEMS, vol. E76-D, no. 7, July 1993 (1993-07), pages 747-754, XP002115064 Japan * the whole document * | 29 | |
| X | DIEP T A ET AL: "SYSTEMATIC VALIDATION OF PIPELINE INTERLOCK FOR SUPERSCALAR MICROARCHITECTURES" 25TH. INTERNATIONAL SYMPOSIUM ON FAULT TOLERANT COMPUTING DIGEST OF PAPERS, PASADENA,US, no. SYMP. 25, 27 - 30 June 1995, pages 100-109, XP000597783 INSTITUTE OF ELECTRICAL AND ELECTRONICS ENGINEERS ISBN: 0-7803-2965-1 * pages 103-105, sections 3-3.2 * * the whole document * | 29 | TECHNICAL FIELDS SEARCHED |
| X | US 5 673 425 A (IWASHITA HIROAKI) 30 September 1997 (1997-09-30) * the whole document * | 29 | |

-/--

The present search report has been drawn up for all claims

| Place of search | Date of completion of the search | Examiner |
|---|---|---|
| THE HAGUE | 13 September 1999 | Klocke, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 0 992 896 A1

European Patent
Office

**EUROPEAN SEARCH REPORT**

Application Number

EP 98 40 2466

## DOCUMENTS CONSIDERED TO BE RELEVANT

| Category | Citation of document with indication, where appropriate, of relevant passages | Relevant to claim | CLASSIFICATION OF THE APPLICATION |
|---|---|---|---|
| X | SALAMA A E ET AL: "FUNCTIONAL TESTING OF PIPELINED PROCESSORS" IEE PROCEEDINGS: COMPUTERS AND DIGITAL TECHNIQUES, vol. 143, no. 5, 1 September 1996 (1996-09-01), pages 318-324, XP000636912 ISSN: 1350-2387 * the whole document * | 29 | |
| A | LEE D C ET AL: "FUNCTIONAL TEST GENERATION FOR PIPELINED COMPUTER IMPLEMENTATIONS" PROCEEDINGS OF THE INTERNATIONAL SYMPOSIUM ON FAULT TOLERANT COMPUT, MONTREAL, JUNE 25 - 27, 1991, no. SYMP. 21, 25 June 1991 (1991-06-25), pages 60-67, XP000242693 INSTITUTE OF ELECTRICAL AND ELECTRONICS ENGINEERS ISBN: 0-8186-2150-8 * the whole document * | 29 | |
| A | TAHAR S ET AL: "FORMAL SPECIFICATION AND VERIFICATION TECHNIQUES FOR RISC PIPELINE CONFLICTS" COMPUTER JOURNAL, vol. 38, no. 2, 1 January 1995 (1995-01-01), pages 111-120, XP000538865 ISSN: 0010-4620 * the whole document * | 29 | |
| A | US 5 708 594 A (NAKATA TSUNEO ET AL) 13 January 1998 (1998-01-13) * the whole document * | 29 | |

TECHNICAL FIELDS
SEARCHED

The present search report has been drawn up for all claims

| Place of search | Date of completion of the search | Examiner |
|---|---|---|
| THE HAGUE | 13 September 1999 | Klocke, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

| | European Patent | **Application Number** |
|---|---|---|
| | Office | EP 98 40 2466 |

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

**European Patent Office**

**LACK OF UNITY OF INVENTION**
**SHEET B**

Application Number

EP 98 40 2466

The Search Division considers that the present European patent application does not comply with the requirements of unity of invention and relates to several inventions or groups of inventions, namely:

1. Claims: 1-28

   Processing engine with pipeline resource protection and method for same

2. Claim : 29

   Method of software testing of a hardware design

**EP 0 992 896 A1**

**ANNEX TO THE EUROPEAN SEARCH REPORT
ON EUROPEAN PATENT APPLICATION NO.**  EP 98 40 2466

This annex lists the patent family members relating to the patent documents cited in the above-mentioned European search report.
The members are as contained in the European Patent Office EDP file on
The European Patent Office is in no way liable for these particulars which are merely given for the purpose of information.

13-09-1999

| Patent document cited in search report | | Publication date | Patent family member(s) | | Publication date |
|---|---|---|---|---|---|
| EP 0649085 | A | 19-04-1995 | DE 69408769 D | | 09-04-1998 |
| | | | DE 69408769 T | | 09-07-1998 |
| | | | JP 7152559 A | | 16-06-1995 |
| | | | US 5630149 A | | 13-05-1997 |
| | | | US 5784589 A | | 21-07-1998 |
| US 5673425 | A | 30-09-1997 | JP 7073037 A | | 17-03-1995 |
| US 5708594 | A | 13-01-1998 | JP 8050554 A | | 20-02-1996 |

EPO FORM P0459

For more details about this annex : see Official Journal of the European Patent Office, No. 12/82

30